# EUROPÄISCHE PATENTSCHRIFT

(11) **EP 1 376 063 B1**
(45) Veröffentlichungstag und Bekanntmachung des Hinweises auf die Patenterteilung: **15.07.2009**
(21) Anmeldenummer: 03007516.2
(22) Anmeldetag: 01.04.2003
(51) Int. Cl.: G01C 21/36

(54) **Verfahren zur Zieleingabe an einem Navigationsgerät und Navigationsdatenbasis**
Method for destination input in a navigation apparatus and navigation data base
Procédé d'entrée de destination dans un appareil de navigation et base de données de navigation

(30) Priorität: 20.06.2002 DE 10227518
(43) Veröffentlichungstag der Anmeldung: 02.01.2004
(73) Patentinhaber: ROBERT BOSCH GMBH, 70442 Stuttgart (DE)
(72) Erfinder: Luuer, Stefan, 31137 Hildesheim (DE); Kossira, Martin, 71672 Marbach a.N. (DE); Hess, Steffan, 71282 Hemmingen (DE)

(56) Entgegenhaltungen:
- EP-A2- 0 789 224
- WO-A-01/69178
- DE-A1- 10 012 572
- DE-A1- 19 742 054
- DE-A1- 19 840 120
- US-A- 5 177 685
- US-B1- 6 230 132

## Beschreibung

### Stand der Technik

Die Erfindung geht von einem Verfahren zur Eingabe eines Navigationsziels in ein Navigationsgerät nach der Gattung des unabhängigen Patentanspruchs aus.

Es sind Navigationsgeräte bekannt, bei denen ein Navigationsziel durch Eingabe eines Orts- bzw. Städtenamens und, sofern entsprechend detaillierte Informationen in einer Navigationsdatenbasis verfügbar sind, nachfolgende Konkretisierung in Form von Straßennamen- und Hausnummerneingabe eingegeben wird. Im Falle mehrerer Navigationsziele mit demselben Ortsnamen werden bei solchen Navigationsgeräten ergänzende Informationen ausgegeben, die dem Benutzer die Auswahl des gewünschten Navigationsziels aus der Menge der Navigationsziele mit dem eingegebenen Ortsnamen ermöglichen sollen. Bei diesen Informationen handelt es sich bei Navigationsgeräten gemäß dem Stand der Technik in der Regel um Postleitzahlen bzw. Postleitzahlenbereiche und/oder die Namen der Landkreise, in denen die Navigationsziele liegen.

Gerade für ortsunkundige Benutzer erweisen sich die genannten ergänzenden Informationen zur sicheren Navigationszielbestimmung aus der Menge der angebotenen Navigationsziele oftmals als unzureichend.

Die DE A19742054 offenbart ein Verfahren zur Eingabe eines Navigationsziels in ein Navigationsgerät, wobei ein Ortsname des Navigationsziels eingegeben wird, wobei im Falle, dass in einer Navigationsdatenbasis mehrere Navigationsziele mit gleichem Ortsnamen vorhanden sind, zu den mehreren Navigationszielen jeweils eine die Unterscheidung der Navigationsziele ermöglichende ergänzende Information zu einem dem jeweiligen Navigationsziel nahegelegenen Ort ausgegeben werden.

Die DE-A-19012572 offenbart eine Navigationsdatenbasis, in der darin gespeicherten Zielortnamen Ortskoordinaten zugeordnet sind.

### Vorteile der Erfindung

Das erfindungsgemäße Verfahren mit den Merkmalen des unabhängigen Patentanspruchs ermöglicht eine für den Benutzer verbesserte, weil einfacher zu erfassende Mehrdeutigkeitsauflösung bei der Navigationszieleingabe.

Dazu ist es erfindungsgemäß vorgesehen, dass zu einem eingegebenen Ortsnamen, zu dem mehrere Navigationsziele vorhanden sind, die zur Erläuterung ausgegebenen ergänzenden Informationen eine Richtungs- und/oder Entfernungsangabe zu einem nächstgelegenen markanten Punkt umfassen. Alternativ kann es in bestimmten Situationen auch sinnvoll sein, dass die ergänzenden Informationen statt des nächstgelegenen eine Richtungs- und/oder Entfernungsinformationen zu einen anderen nahegelegenen markanten Punkt umfassen.

Ein markanter Punkt im oben genannten Sinne ist gemäß einer vorteilhaften Ausführungsform der Erfindung insbesondere der Name einer dem Navigationsziel nahe- oder nächstgelegenen Großstadt.

Vorteilhafter Weise wird die Richtungs- und/oder Entfernungsangabe aufgrund von Ortskoordinaten der Navigationsziele und der markanten Punkte bestimmt. Dazu sind in einer Navigationsdatenbasis zu jedem gespeicherten Navigationsziel und zu jedem der als Teil der ergänzenden Informationen ausgebbaren markanten Punkte Ortskoordinaten, insbesondere Ortsmittelpunktskoordinaten, also insbesondere die Ortskoordinaten von Stadtzentren der Großstädte, gespeichert.

Eine Vereinfachung ergibt sich gemäß einer vorteilhaften Ausführungsform der Erfindung dadurch, dass die Navigationsdatenbasis, die insbesondere Straßen- und Ortsdaten eines Ausschnitts der Erdoberfläche beinhaltet, in einander benachbarte geografische Gebiete abdeckende Kacheln unterteilt ist, und dass zur Bestimmung der ergänzenden Informationen zunächst nur die Kacheln berücksichtigt werden, in denen die Navigationsziele liegen, deren Name eingegeben wurde. Hierdurch wird die zwischen Datenbasis und Rechner bzw. Mikroprozessor des Navigationsgeräts zum Zweck der Bestimmung der ergänzenden Informationen auszutauschende Datenmenge erheblich vermindert. Dies ist insbesondere dann von besonderer Bedeutung, wenn die Datenbasis in einer bezüglich des Navigationsgeräts externen Datenbank vorgehalten wird und ein Datenaustausch zwischen Navigationsgerät und Datenbank beispielsweise über eine kostenpflichtige Mobilfunkschnittstelle abgewickelt wird.

Eine vorteilhafte Weiterbildung dieser vorteilhaften Ausführungsform ergibt sich dadurch, dass für den Fall, dass in einer Kachel, in der ein Navigationsziel liegt, dessen Name eingegeben wurde, kein markanter Punkt verfügbar ist, die die betroffene Kachel unmittelbar umgebenden Kacheln auf das Vorhandensein eines markanten Punkts geprüft werden. Auf diese Weise kann die zwecks Bestimmung der ergänzenden Informationen zu transportierenden bzw. zu verwaltende Datenmenge zunächst klein gehalten werden, gleichzeitig wird aber die Möglichkeit der Suche im gesamten in der Datenbasis verfügbaren Datenbestand ermöglicht. Darüber hinaus ermöglicht diese Vorgehensweise eine zweckmäßige Beschränkung des zu bewältigenden Datenvolumens auch zwecks erweitertem Suchradius erweitertem Datenvolumen.

Von Vorteil ist weiterhin eine speziell angepasste Navigationsdatenbasis zur Durchführung des vorstehend beschriebenen Verfahrens, welche sich erfindungsgemäß dadurch auszeichnet, dass zu jedem gespeicherten Navigationsziel und zu jedem der als Teil der ergänzenden Informationen ausgebbaren markanten Punkte Ortskoordinaten, insbesondere Ortsmittelpunktskoordinaten, gespeichert sind.

### Zeichnungen

Ausführungsbeispiele der Erfindung sind in den Figuren dargestellt und werden nachfolgend näher erläutert.

Es zeigen
Figur 1 ein Blockschaltbild des erfindungswesentlichen Teils eines Fahrzeugnavigationsgeräts 1 zur Durchführung des erfindungsgemäßen Verfahrens umfassend eine erfindungsgemäße Datenbasis zur Durchführung des erfindungsgemäßen Verfahrens,
Figur 2 einen Kartenausschnitt als Beispiel für in einer Datenbasis zur Durchführung des erfindungsgemäßen Verfahrens abgelegte Informationen.

### Beschreibung der Ausführungsbeispiele

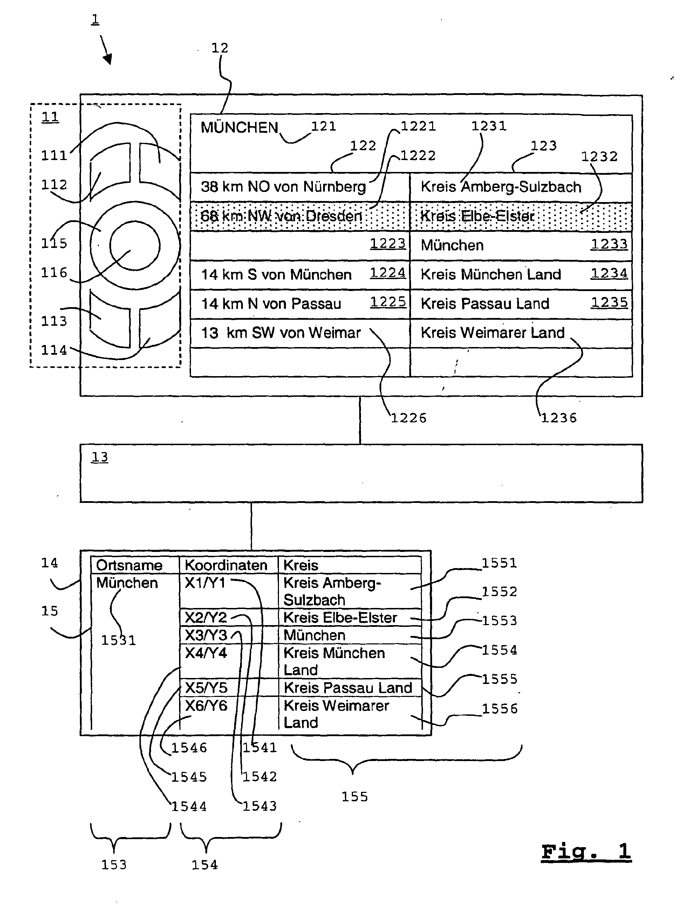

Figur 1 zeigt ein Blockschaltbild eines erfindungsgemäßen Navigationsgeräts zur Durchführung des erfindungsgemäßen Verfahrens am konkreten Beispiel eines Fahrzeugnavigationsgeräts 1.

Das Fahrzeugnavigationsgerät 1 umfasst eine Benutzerschnittstelle (MMI) umfassend eine Eingabeeinheit 11 und eine Anzeigeeinheit 12. Die Eingabeeinheit 11 umfasst verschiedene Bedienelemente, wie einen mit einem Drehknopf verbundenen Inkrementengeber 115 mit einer zentral angeordneten Bestätigungs- oder "Enter-" Taste 116. Der Drehknopf dient der Bewegung eines Cursors in einer auf der Anzeigeeinheit dargestellten Auswahlliste, der in der Figur durch die Schraffur auf der Anzeigeeinheit 12 symbolisiert ist oder alternativ zur Verstellung eines vorgewählten Parameters, wie etwa der Verstellung der Wiedergabelautstärke einer Audiokomponente, die in das Navigationsgerät 1 integriert sein kann. Ein in der Auswahlliste mittels des Cursors angewählter Eintrag kann in an sich bekannter Weise durch Betätigung der Bestätigungstaste 116 ausgewählt werden.

Die Bedieneinheit 11 umfasst darüber hinaus weitere Bedienelemente, wie Tastschalter 111, 112, 113 und 114, die beispielsweise der Auswahl eines zu verstellenden Parameters oder der Auswahl einer bestimmten aus der Menge der Auswahllisten oder zur Auslösung sonstiger, insbesondere besonders häufig benötigter Bedienfunktionen dienen können.

Die Benutzerschnittstelle 11, 12 ist mit einem Mikroprozessor 13 verbunden, der eine Bediensoftware zur Bedienung des Navigationsgeräts 1 abarbeitet.

An den Mikroprozessor 13 ist weiterhin eine Datenbank 14 angeschlossen, die beispielsweise in Form einer in ein Plattenlaufwerk eingelegten Daten-CD-ROM ausgeführt sein kann. Alternative Ausführungsformen eines geräteinternen Massenspeichers sind ebenfalls möglich. Gemäß einer alternativen Ausführungsform der Datenbank kann diese auch bezüglich des Navigationsgeräts extern, vorgesehen sein und beispielsweise bei einem externen Diensteanbieter vorgehalten werden, wobei für das erfindungsgemäße Verfahren ebenso wie für die eigentliche Navigation benötigte Daten beispielsweise über eine Mobilfunkverbindung zwischen Anbieter und Navigationsgerät 1 dem Mikroprozessor 13 bedarfsweise zuführbar sind.

Die Datenbank 14 beinhaltet eine Datenbasis 15 zur Durchführung des erfindungsgemäßen Verfahrens. Diese enthält eine Liste 153 von Ortsnamen von potentiellen Navigationszielen, in der Regel also Ortsnamen aller Orte, Gemeinden, und Städte, die innerhalb eines interessierenden Ausschnitts der Erdoberfläche liegen, also beispielsweise die Ortsnamen aller Orte, Gemeinden und Städte innerhalb Deutschlands oder Europas. Ein in der Figur dargestellter Ausschnitt der Datenbasis 15 zeigt den Ortsnamen München (1531) als Bestandteil der Ortsnamensliste 153.

Zu jedem Ortsnamen sind in einer Koordinatenliste 154 die Koordinaten der Orts- oder Stadtzentren sämtlicher Orte, Gemeinden oder Städte mit diesem Ortsnamen gespeichert. Im in der Figur dargestellten Fall existieren beispielsweise innerhalb Deutschlands sechs Orte bzw. Städte mit dem Namen München (1531), die die Ortskoordinatenpaare X1/Y1 (1541), X2/Y2 (1542), X3/Y3 (1543), X4/Y4 (1544), X5/Y5 (1545) und X6/Y6 (1546) aufweisen. Die Ortskoordinaten können dabei beispielsweise in geografischen Längen- und Breitengraden angegeben sein.

In einer Erläuterungsliste 155 sind zu den Koordinatenpaaren der Koordinatenliste 154 jeweils Erläuterungen 1551, 1552, 1553, 1554, 1555 und 1556, die eine für den Benutzer leicht verständliche Zuordnung der Ortskoordinaten zu einem bestimmten Gebiet oder einer Region ermöglichen, gespeichert. Im Falle der Figur 1 sind dies die Namen von Verwaltungseinheiten, hier insbesondere der Land- bzw. Stadtkreise, in denen die Orte mit dem Namen "München" liegen. Alternativ oder ergänzend zu den Kreisnamen können z. B. Postleitzahlen oder Postleitzahlenbereiche als erläuternde Informationen in der Erläuterungsliste 155 gespeichert sein.

Das beschriebene Navigationsgerät 1 ist Basis für nachstehend erläutertes erfindungsgemäßes Verfahren zur Navigationszieleingabe.

Durch Drehen des Drehknopfes 115 wählt der Benutzer zunächst einen Buchstaben aus dem auf der Anzeigeeinheit 12 dargestellten Alphabet an und gibt diesen als ersten Buchstaben des Ortsnamens des Navigationsziels durch anschließendes Betätigen der Bestätigungstaste 116 ein. In analoger Weise gibt der Benutzer weitere Buchstaben des Ortsnamens des Navigationsziels ein, solange, bis der vollständige Ortsname des Navigationsziels eingegeben ist oder aufgrund eines Abgleichs der eingegebenen Zeichenfolge mit in der Datenbasis 15 vorhandenen Ortsnamen ein Ortsname der eingegebenen Zeichenfolge eindeutig zugeordnet werden kann. Bei dem in der Figur dargestellten Beispiel wurde der Ortsname 121 "München" in beschriebener Weise eingegeben und wird in einem ersten Bereich auf der Anzeigeeinheit 12 dargestellt.

Nach vollständiger Eingabe des Ortsnamens des Navigationsziels ermittelt der Mikroprozessor 13 in der Datenbasis 15 alle Orte bzw. potentiellen Navigationsziele, die den eingegebenen Ortsnamen, hier "München" , aufweisen. Im in der Figur dargestellten Beispiel sind in der Datenbasis sechs Orte/Gemeinden/Städte mit dem Ortsnamen München vorhanden, nämlich "München" im Kreis "Amberg-Sulzbach" , "München" im Kreis "Elbe-Elster" , die bayerische Landeshauptstadt "München" , "München" im Landkreis "München" , "München" im Kreis "Passau Land" und "München" im Kreis "Weimarer Land" . Ferner liest der Mikroprozessor 13 aus der Datenbasis die Ortskoordinatenpaare 1541 bis 1546 der genannten potentiellen Navigationsziele mit dem Ortsnamen "München" aus.

Weiterhin liest der Mikroprozessor 13 aus der Datenbasis 15 die Koordinaten in der Umgebung der potentiellen Navigationsziele gelegener markanter Punkte, die in zu den potentiellen Navigationszielen analoger Form in der Datenbank 14 gespeichert sind, nämlich mit Ortsnamen, Ortskoordinaten und erläuternden Informationen. Im Fall des hier beschriebenen Ausführungsbeispiels handelt es sich bei den markanten Punkten vorzugsweise um Großstädte, deren ungefähre geografische Lage für die Allgemeinheit der Benutzer des Navigationsgeräts 1 als gemeinhin bekannt vorausgesetzt werden kann. Markante Punkte im Sinne vorliegender Erfindung können aber auch beispielsweise größere Flüsse, Gebirge oder Gebirgszüge, nationale Grenzen, besondere Sehenswürdigkeiten, Straßenzüge besonders wichtiger Verkehrswege, wie z.B. Autobahnen usw., oder beispielsweise über besondere Namen verfügenden Straßen z.B. die deutsche "Weinstraße" , " romantischen Straße" usw., sein.

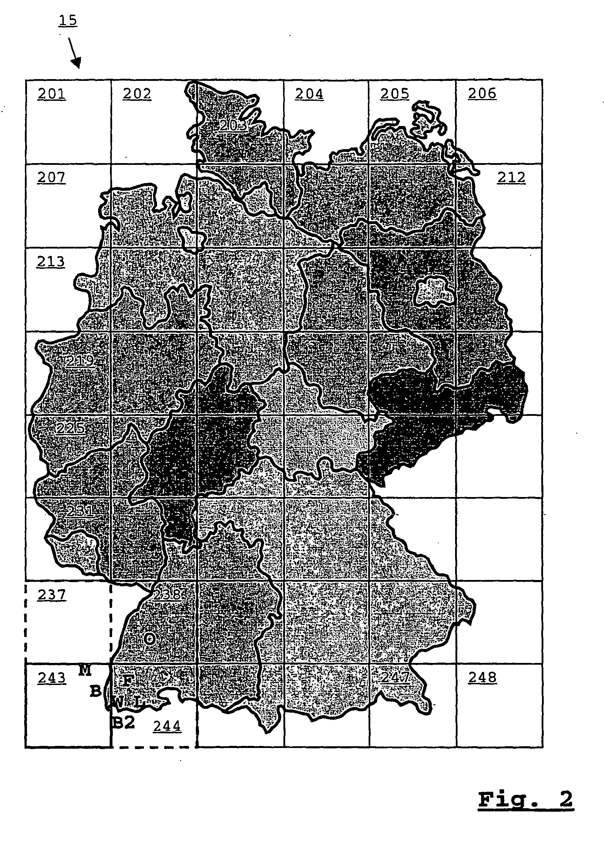

Die durch den Mikroprozessor 13 zu lesende Datenmenge kann an dieser Stelle des erfindungsgemäßen Verfahrens vorteilhaft dadurch begrenzt werden, dass die Menge der verfügbaren markanten Punkte, zu denen die Daten aus der Datenbasis in den Mikroprozessor gelesen werden müssen, beschränkt wird. Dies ist beispielsweise in Verbindung mit einer speziellen Ausgestaltung der Datenbasis realisierbar. Eine solche spezielle Ausgestaltung der Datenbasis 15, die beispielhaft in Verbindung Figur 2 dargestellt ist, sieht vor, dass der in der Datenbasis 15 abgebildete Ausschnitt der Erdoberfläche, also beispielsweise die Kartendaten Deutschlands oder Europas, in aneinander angrenzende benachbarte sogenannte Kacheln 201, 202, 203, 204, 205, 206, 207, ..., 212, ..., 213, ..., 219, ..., 225, ..., 231, .... 237, 238, ..., 243, 244, ..., 247, 248 unterteilt ist. In diesem Fall ermittelt der Mikroprozessor 13 diejenigen Kacheln bzw. Kartenausschnitte, innerhalb derer die potentiellen Navigationsziele mit dem eingegebenen Ortsnamen liegen, und liest die Daten nur derjenigen markanten Punkte, die innerhalb der betroffenen Kacheln liegen.

Beispielsweise könnte die Karte Deutschlands unterteilt sein, insbesondere in die Bundesländer Deutschlands abdeckende Kacheln unterteilt sein. Nach Eingabe des Ortsnamens "München" würden dann beispielsweise nicht die Daten sämtlicher Großstädte Deutschlands (als markanter Punkte) durch den Mikroprozessor aus der Datenbasis 15 gelesen, sondern vielmehr nur derjenigen Großstädte, die innerhalb solcher Kacheln liegen, in denen auch jeweils ein Navigationsziel mit dem Ortsnamen "München" liegt. So würde beispielsweise im Falle der bayerischen Landeshauptstadt zunächst nur die das Bundesland Freistaat Bayern abdeckende Kachel betrachtet und folglich nur die Daten der innerhalb des Freistaats Bayern liegenden Großstädte durch den Mikroprozessor 13 aus der Datenbasis gelesen. Analog würden für weitere potentielle Navigationsziele mit dem Ortsnamen "München" nur diejenigen Kacheln betrachtet, innerhalb derer die potentiellen Navigationsziele mit dem Namen "München" liegen.

In der Praxis wird eine Unterteilung des in der Datenbasis abgebildeten Ausschnitts der Erdoberfläche, hier Deutschlands, in Bundesländer aufgrund der teilweise sehr unterschiedlichen geografischen Ausdehnung der Bundesländer (vgl. z.B. Freistaat Bayern und Saarland) und auch der sehr unterschiedlichen Anzahl markanter Punkte je Bundesland (vgl. z.B. Nordrhein-Westfalen und Saarland) nicht unbedingt zweckmäßig sein. Sinnvoller und in der Praxis häufiger anzutreffen ist eine Unterteilung eines bestimmten Ausschnitts der Erdoberfläche in Kacheln 201, ..., 248 im wesentlichen gleicher Fläche bzw. Ausdehnung.

Für den Fall, dass innerhalb einer betrachteten Kachel 243, innerhalb derer ein potentielles Navigationsziel, das über den eingegebenen Ortsnamen "B" verfügt, keine oder eine unzureichende Anzahl von zum Beispiel weniger als zwei markanten Punkten liegt, ist es vorgesehen, dass der Suchradius zur Ermittlung markanter Punkte auf die die betroffene Kachel unmittelbar umgebenden Kacheln ausgedehnt wird. Aufgrund der Randlage des Navigationsziels "B" innerhalb der Kachel Nummer 243 finden sich, zumindest innerhalb Deutschlands in der Kachel 243 keine als markante Punkte geeigneten Großstädte. Daher wird erfindungsgemäß der Suchbereich für geeignete markante Punkte auf die der betrachteten Kachel 243 unmittelbar benachbarten Kacheln ausgedehnt. Aufgrund der Randlage der betrachteten Kachel 243 relativ zum durch die Datenbasis abgedeckten geografischen Bereich im Beispiel der Figur 2 sind dieslediglich die angrenzenden Kacheln 237, 238 und 244. Markante Punkte im Sinne der Erfindung, hier also beispielsweise Großstädte, finden sich lediglich in den zusätzlich betrachteten Kacheln 238, nämlich die Stadt mit dem Namen "O" und 244, hier nämlich die Städte mit den Namen "F" , "L" und "W". Für den Fall, dass auch ausländische Städte als markante Punkte in Betracht gezogen werden sollen bzw. dürfen, kommen weiterhin die französische Stadt "M" in derselben Kachel 243, in der auch das potentielle Navigationsziel mit Ortsnamen "B" liegt sowie die Schweizer Stadt "B2" in der Kachel Nummer 244 in Betracht.

Aufgrund der aus der Datenbasis gelesenen Ortskoordinaten zum einen der potentiellen Navigationsziele mit dem eingegebenen Ortsnamen und zum anderen der gelesenen Ortskoordinaten der in deren Nähe gelegenen Großstädte bestimmt der Mikroprozessor die Entfernungen, vorzugsweise Luftlinienentfernungen, der potentiellen Navigationsziele zu den in deren Nähe gelegenen markanten Punkten, hier also Großstädten.

Aufgrund der berechneten Entfernungen zwischen potentiellen Navigationszielen und der dazu jeweils ermittelten markanten Punkte kann bereits eine Auswahl der jeweils aussagekräftigsten, das heißt in den meisten Fällen der den potentiellen Navigationszielen nächstgelegenen markanten Punkte als ergänzende Informationen zu den potentiellen Navigationszielen erfolgen.

Weiterhin ermittelt der Mikroprozessor aufgrund der Ortskoordinaten von potentiellen Navigationszielen und markanten Punkten Richtungsinformationen, die angeben, in welcher Richtung jedes potentielle Navigationsziel relativ zum jeweils ausgewählten markanten Punkt liegt.

Ist eine Vorauswahl der markanten Punkte aufgrund der ermittelten Entfernung noch nicht erfolgt; kann nun die Auswahl jeweils eines geeignetsten markanten Punktes zu jedem der potentiellen Navigationsziele aufgrund der ermittelten Luftlinienentfernungen und Richtungsinformationen, gegebenenfalls unter Berücksichtigung weiterer Kriterien, erfolgen.

Die berechneten Informationen werden als ergänzende Informationen zu dem eingegebenen Ortsnamen ausgegeben. Existieren mehrere potentielle Navigationsziele mit dem eingegebenen Ortsnamen, werden zu jedem der potentiellen Navigationsziele entsprechende relativen Lageinformationen berechnet und ausgegeben.

Gemäß einer ersten Ausführungsform werden aus der Menge der zu jedem der potentiellen Navigationsziele ermittelten markanten Punkte (Großstädte) jeweils diejenigen ausgewählt, die eine geringste Luftlinienentfernung zum jeweiligen potentiellen Navigationsziel, also Ort/Gemeinde/Stadt mit eingegebenen Namen, gemäß Figur 1 "München" , aufweisen. Zu dem Ortsnamen "München" wurden in der Datenbasis sechs verschiedenen Orte, die als Navigationsziele in Frage kommen, ermittelt. Der Mikroprozessor 13 bestimmt zu jedem der potentiellen Navigationsziele dessen relative Lage zu einem, insbesondere nächstgelegenen, markanten Punkt und gibt diese in Form einer kombinierten Entfernungs- und Richtungsangabe des jeweiligen potentiellen Navigationsziels zum jeweils zugehörig ermittelten markanten Punkt als ergänzenden Hinweis zu dem jeweiligen potentiellen Navigationsziel auf der Anzeigeeinheit 12 aus.

Im Falle des eingegebenen Ortsnamens "München" werden also in einem zweiten Bereich 122 der Anzeigeeinheit 12 die relativen Positionen der in der Datenbasis verfügbaren Navigationsziele mit dem Ortsnamen "München" zu den nächstgelegenen Großstädten ausgegeben, also "38 km nordöstlich von Nürnberg" (1221) für "München" im Kreis "Amberg-Sulzbach" , "68 km nordwestlich von Dresden" (1222) für "München" im Kreis "Elbe-Elster" , keine erläuternde Angabe (1223) für die bayerische Landeshauptstadt "München" , "14 km südlich von München" (1224) für "München" im Kreis "München Land" , "14 km nördlich von Passau" (1225) für "München" im Kreis "Passau Land" und "13 km südwestlich von Weimar" (1226) für "München" um Kreis "Weimarer Land" .

Für den Fall, dass als markante Punkte vorzugsweise Großstädte betrachtet werden, kann es vorgesehen sein, dass die Größe der als markante Punkte in Frage kommenden Großstädte in Abhängigkeit der Großstadtdichte im Umkreis des potentiellen Navigationsziel gewählt wird. Beispielsweise wird bei Eingabe von Ortsnamen mit zugehörigen Zielen im Saarland die Stadt "Saarlouis" als markanter Punkt dienen können, obwohl diese möglicherweise kleiner ist, als beispielsweise die Stadt "Mülheim" im Ruhrgebiet, die aber angesichts der hohen Dichte großer Städte im Ruhrgebiet zugunsten der nächstgelegenen größeren Stadt "Essen" nicht als markanter Punkt berücksichtigt wird.

Weiterhin können Städte bzw. markante Punkte, deren Namen auf eine Region hinweisen, wie z. B. "Saarbrücken" , anderen in ihrer Umgebung und näher am potentiellen Navigationsziel liegenden Städten als ergänzende Informationen vorgezogen werden.

Weitere Beispiele, in denen möglicherweise weniger bedeutende oder weiter vom potentiellen Navigationsziel entfernte markante Punkte als ergänzende Informationen ausgegeben werden, sind vorstellbar und liegen im Bereich der erfindung.

Statt der Angabe der relativen Position der potentiellen Navigationsziele mit dem eingegebenen Ortsnamen zur nächsten Großstadt können auch relative Positionen zu anderen markanten Punkte, etwa zu großen Flüssen, nationalen Grenzen, besonderen Sehenswürdigkeiten, Straßennamen (z. B. an der A8 usw.) oder beispielsweise über besondere Namen verfügenden Straßen (z. B. "An der Weinstraße" , " An der romantischen Straße" o.ä.) ausgegeben werden.

Auch kann vorgesehen sein, dass nicht notwendig die relative Position zur nächstgelegenen Großstadt ausgegeben wird, sondern die relative Position zu einer beispielsweise aufgrund ihrer relativen Position zum Navigationsziel besonders hervorgehobenen Großstadt aus einer Menge von nahegelegenen Großstädten.

In einem dritten Bereich 123 werden schließlich weitere erläuternde Informationen, die in der Datenbasis 15 vorhanden sind, im Beispiel der Figur 1 die Namen der Kreise 1231, 1232, 1233, 1234, 1235, 1236, zu denen die potentiellen Navigationsziele mit dem Namen "München" gehören, angezeigt.

Aus den wie beschrieben auf der Anzeigeeinheit 12 des Navigationsgeräts 1 dargestellten Navigationszielen mit dem eingegebenen Ortsnamen kann durch Markierung eines der Einträge das gewünschte Navigationsziels mittels der Cursorsteuerung 115 an- und durch Betätigung der Bestätigungstaste 116 eingegeben werden.

## Patentansprüche

1. Verfahren zur Eingabe eines Navigationsziels in ein Navigationsgerät, wobei ein Ortsname des Navigationsziels eingegeben wird,
wobei im Falle, dass in einer Navigationsdatenbasis mehrere Navigationsziele mit gleichem Ortsnamen vorhanden sind, zu den mehreren Navigationszielen jeweils eine Unterscheidung der Navigationsziele ermöglichende ergänzende Informationen ausgegeben werden,
**dadurch gekennzeichnet,**
**dass** die ergänzenden Informationen eine Richtungs- und/oder Entfernungsangabe zu einem dem jeweiligen Navigationsziel nahe- oder nächstgelegenen markanten Punkt umfassen.

2. Verfahren nach Anspruch 1, **dadurch gekennzeichnet, dass** die ergänzenden Informationen eine Richtungs- und/oder Entfernungsangabe zu einer dem jeweiligen Navigationsziel nahe- oder nächstgefegenen Großstadt umfassen.

3. Verfahren nach Anspruch 1 oder 2, **dadurch gekennzeichnet, dass** die Richtungs- und/oder Entfernungsangabe aufgrund von Ortskoordinaten der Navigationsziele und der markanten Punkte erfolgt.

4. Verfahren nach einem der vorhergehenden Ansprüche,
**dadurch gekennzeichnet, dass** die Navigationsdatenbasis in einander benachbarte geografische Gebiete abdeckende Kacheln unterteilt ist,
und dass zur Bestimmung der ergänzenden Informationen zunächst nur die Kacheln berücksichtigt werden, in denen die Navigationsziele liegen, deren Ortsname eingegeben wurde.

5. Verfahren nach Anspruch 4, **dadurch gekennzeichnet, dass** für den Fall, dass in einer Kachel, in der ein Navigationsziel liegt, dessen Ortsname eingegeben wurde, kein markanter Punkt verfügbar ist, die betroffene Kachel unmittelbar umgebenden Kacheln auf das Vorhandensein eines markanten Punkts geprüft werden.

6. Navigationsgerät ausgebildet zur Durchführung des Verfahrens nach einem der Ansprüche 1 bis 5.

## Claims

1. Method for inputting a navigation destination into a navigation appliance, wherein a place name for the navigation destination is input,
wherein if a navigation database contains a plurality of navigation destinations with the same location name then supplementary information respectively allowing the navigation destinations to be distinguished is output for the plurality of navigation destinations,
**characterized**
**in that** the supplementary information comprises a direction and/or distance statement for a prominent point close or closest to the respective navigation destination.

2. Method according to Claim 1, **characterized in that** the supplementary information comprises a direction and/or distance statement for a city close or closest to the respective navigation destination.

3. Method according to Claim 1 or 2, **characterized in that** the direction and/or distance statement is made on the basis of location coordinates for the navigation destinations and for the prominent points.

4. Method according to one of the preceding claims, **characterized in that** the navigation database is divided into adjacent tiles covering geographical areas, and **in that** the supplementary information is determined by first of all taking account of only the tiles which contain the navigation destinations whose place name has been input.

5. Method according to Claim 4, **characterized in that** if there is no prominent point available in a tile which contains a navigation destination whose place name has been input then the tiles immediately surrounding the relevant tile are checked for the presence of a prominent point.

6. Navigation appliance designed for performing the method according to one of Claims 1 to 5.

## Revendications

1. Procédé d'entrée d'une destination de navigation dans un appareil de navigation, dans lequel on entre un nom de lieu de la destination de navigation, dans lequel, au cas où plusieurs destinations de navigation de même nom de lieu se trouvent dans la base de données de navigation, on fournit respectivement aux diverses destinations de navigation, des informations complémentaires permettant de distinguer les destinations de navigation,
**caractérisé en ce que** les informations complémentaires comprennent une indication de direction et/ou de distance vers un point marquant proche ou situé à proximité immédiate de la destination de navigation respective.

2. Procédé selon la revendication 1, **caractérisé en ce que** les informations complémentaires comprennent une indication de direction et/ou de distance vers une métropole proche ou située à proximité immédiate de la destination de navigation respective.

3. Procédé selon la revendication 1 ou 2, **caractérisé en ce que** l'indication de direction et/ou de distance est basée sur les coordonnées des lieux de la destination de navigation et des point marquants.

4. Procédé selon une des revendications précédentes, **caractérisé en ce que** la base de données de navigation est subdivisée en carreaux couvrant des domaines géographiques mutuellement adjacents, et **en ce que** pour la détermination des informations complémentaires, on ne considère tout d'abord que les carreaux contenant les destinations de navigation dont on a entré les noms de lieu.

5. Procédé selon la revendication 4, **caractérisé en ce qu'**au cas où aucun point marquant n'est disponible dans un carreau dans lequel se situe une destination de navigation dont le nom du lieu a été entré, on contrôle s'il existe un point marquant dans les carreaux entourant immédiatement le carreau concerné.

6. Appareil de navigation développé pour l'exécution du procédé selon une des revendications 1 à 5.
